# EUROPÄISCHE PATENTSCHRIFT

(11) **EP 3 495 114 B1**
(45) Veröffentlichungstag und Bekanntmachung des Hinweises auf die Patenterteilung: **16.11.2022**
(21) Anmeldenummer: 17205426.4
(22) Anmeldetag: 05.12.2017
(51) Int. Cl.: B29C 64/264, B29C 64/112, B33Y 30/00, B33Y 10/00

(54) **VERFAHREN ZUR HERSTELLUNG EINES BAUTEILS SOWIE ANLAGE DAFÜR**
METHOD FOR MANUFACTURING A COMPONENT AND ASSEMBLY FOR SAME
PROCÉDÉ DE FABRICATION D'UN COMPOSANT AINSI QUE L'INSTALLATION ASSOCIÉE

(43) Veröffentlichungstag der Anmeldung: 12.06.2019
(73) Patentinhaber: Medizinische Hochschule Hannover, 30625 Hannover (DE)
(72) Erfinder: Stieghorst, Jan, 29352 Adelheidsdorf (DE); Doll, Theodor, 30916 Isernhagen (DE)
(74) Vertreter: Gramm, Lins & Partner Patent- und Rechtsanwälte PartGmbB

(56) Entgegenhaltungen:
- EP-A1- 3 012 079
- WO-A1-2016/079062
- WO-A2-97/48557

## Beschreibung

Die Erfindung betrifft ein Verfahren zur Herstellung eines Bauteils gemäß dem Oberbegriff des Anspruchs 1. Die Erfindung betrifft außerdem eine Anlage zur Herstellung eines Bauteils mittels eines generativen Fertigungsprozesses gemäß Anspruch 8.

Generative Fertigungsprozesse sind z.B. Stereolithografie, selektives Laserschmelzen, selektives Lasersintern, Fused Deposition Modeling, Laminated Object Modelling, 3D-Printing (auch 3D-Druck genannt) sowie Kaltgasspritzen, insbesondere auch sämtliche Fertigungsverfahren des Rapid Prototyping, des Rapid Tooling und des Rapid Manufacturing. Die vorliegende Erfindung betrifft insbesondere additive Fertigungsverfahren, z.B. für die Fertigung von Bauteilen aus flüssigen Kunststoffen. Die Erfindung betrifft insbesondere das Gebiet der medizinischen Implantatversorgung mit patientenindividualisierten Implantaten, insbesondere Weichimplantate.

Ein solches Verfahren sowie eine entsprechende Anlage sind bereits aus der DE 10 2015 101 810 A1 bekannt. Aus der WO 97/48557 A2 sind Verfahren zum 3D-Drucken und Formen von Strukturen bekannt. Aus der EP 3012079 A1 ist eine Aushärtungsvorrichtung für einen 3D-Drucker bekannt, der eine Ultraviolett-Leuchtdiode einsetzt.

Der Erfindung liegt die Aufgabe zugrunde, das bekannte Verfahren sowie die Anlage hinsichtlich der Fertigungseffizienz weiter zu verbessern und einen kontinuierlichen Fertigungsprozess zu ermöglichen.

Diese Aufgabe wird mit einem Verfahren gemäß Anspruch 1 gelöst. Dies beinhaltet, dass der Lichtstrahl von der Lichtstrahlquelle oder einer das Licht der Lichtstrahlquelle beeinflussenden optischen Einrichtung mit einem im Wesentlichen Ring-förmigen Licht-Intensitätsprofil abgegeben wird. Die Erfindung hat den Vorteil, dass die bei einem solchen generativen Fertigungsverfahren üblicherweise eingesetzten Komponenten zur Bereitstellung und Abgabe des Rohmaterials zuverlässiger und mit weniger Wartungsunterstützung eingesetzt werden können. So kann insbesondere ein Verkleben oder Verstopfen einer Rohmaterial-Abgabeeinrichtung oder von dessen Rohmaterial-Abgabedüse durch zu frühzeitig verfestigtes Rohmaterial vermieden oder zumindest deutlich vermindert werden. Somit wird durch die Erfindung ein kontinuierlicher Fertigungsprozess erst ermöglicht, weil eine Düsenverstopfung vermieden werden kann. Dies wird durch das im Wesentlichen Ring-förmige Licht-Intensitätsprofil erreicht, mit dem es möglich ist, die Lichtabstrahlung im Bereich der Rohmaterial-Abgabedüse so einzustellen, dass das Rohmaterial nicht bereits in der Düse oder unmittelbar nach Austreten aus der Düse verfestigt wird. Dies beinhaltet auch die vollständig Vermeidung von Strahlungsabsorption im Bereich der Abgabevorrichtung.

Ein weiterer positiver Aspekt der Erfindung ist die Vermeidung oder zumindest Verminderung der strahlungsbedingten Erwärmung der Abgabevorrichtung, welche zu einer Veränderung der Materialparameter wie z.B. der Viskosität führen kann. Da dies die Stabilität des Prozesses stark beeinflussen kann, kann dies durch die Erfindung ohne Zusatzaufwand vermieden werden. Normalerweise würde man hier an komplexe Kühl- und Temperieranlagen denken, welche aber mit der Erfindung eingespart oder zumindest kleiner dimensioniert werden können.

Das Licht der Lichtstrahlquelle kann z.B. Licht im sichtbaren Spektrum, aber auch UV- und IR-Anteile umfassen.

Das im Wesentlichen Ring-förmige Licht-Intensitätsprofil kann auch als im Wesentlichen Torus-förmiges Licht-Intensitätsprofil bezeichnet werden. Ein Torus ist ein aus der Mathematik bekanntes geometrisches Objekt. Man kann sich einen Torus vorstellen als eine "wulstartig" geformte Fläche mit einem Loch in der Mitte, etwa in der Gestalt eines Rettungsrings, Reifens oder Donuts. Das erfindungsgemäß vorgeschlagene im Wesentlichen Ring-förmige Licht-Intensitätsprofil ist dementsprechend gekennzeichnet durch einen ringförmigen Bereich, in dem die Licht-Intensität vom Außendurchmesser in Richtung zur Mitte des Ring zunächst ansteigt und dann zum Innendurchmesser des Ring hin wieder abfällt. Im Innenbereich des Ring, d.h. innerhalb des Innendurchmessers, ist die Lichtintensität im Wesentlichen gleich null. Insofern hat das im Wesentlichen Ring-förmige Licht-Intensitätsprofil präziser ausgedrückt die Form eines "halben" Ring, da die Lichtintensität immer gleich oder größer null ist.

Im Querschnitt kann das im Wesentlichen Ring-förmige Licht-Intensitätsprofil, d.h. die Lichtintensität über eine radiale Koordinate r, einen gekrümmten und/oder eckigen Verlauf haben, bis hin zu Intensitätsprofilen mit einem rechteckigen Querschnitt. Dies kann ungewollte Temperaturspitzen eines gekrümmten Ring-förmigen Profils (am Scheitelpunkt) vermeiden. Weiterhin könnten durch die Verwendung multipler und/oder robotisch gesteuerter Strahlabgabevorrichtungen geeignete Licht-Intensitätsprofile erzeugt werden, mit denen nur das zu bestrahlende Material bestrahlt wird. Bisher werden typischerweise auch bereits vernetzte angrenzende Bereiche bestrahlt, was im Grenzfall zu einer Überhitzung und damit zu einer thermischen Degradation führen kann.

Der Einsatz eines solchen Licht-Intensitätsprofils hat den Vorteil, dass weiterhin eine relativ schnelle gezielte Verfestigung des Rohmaterials in den gewünschten Bereichen möglich ist und somit eine ungewünschte oder unkontrollierte Spreizung des aufgebrachten noch flüssigen Rohmaterials weitestgehend vermieden wird, was auftreten würde, wenn insgesamt die Lichtintensität reduziert werden würde. Das Ring-förmige Licht-Intensitätsprofil kann im Abstrahlbereich des Lichts erzeugt werden, d.h. dort, wo der Lichtstrahl von der Lichtstrahlquelle oder der das Licht der Lichtstrahlquelle beeinflussenden optischen Einrichtung abgegeben wird. Alternativ oder zusätzlich kann das Ring-förmige Licht-Intensitätsprofil auch im Auftreffbereich des Lichtstrahls, d.h. im Fertigungsbereich, erzeugt werden. Die Ring-Form kann die Form eines kreisförmigen (rotationssymmetrischen) Rings sein oder eines in Draufsicht elliptischen Rings oder einer ähnlichen Form. Wird beispielsweise der Lichtstrahl von der Lichtstrahlquelle oder der optischen Einrichtung in einem schrägen Winkel zum Fertigungsbereich abgestrahlt, d.h. nicht genau senkrecht zum Fertigungsbereich, so wird hierdurch ein Ring-förmiges Licht-Intensitätsprofil, das im Abstrahlbereich kreisrund ist, in ein im Auftreffbereich ovales Licht-Intensitätsprofil verzerrt. Dies ist aber für die Ausführung der Erfindung nicht nachteilig. Soll im Auftreffbereich ein kreisrundes Ring-förmiges Licht-Intensitätsprofil erzeugt werden, so kann dies durch eine rechtwinklige Ausrichtung des Lichtstrahls zum Fertigungsbereich oder durch eine entsprechende eine schräge Abstrahlung kompensierende Entzerrung erreicht werden, beispielsweise mittels der optischen Einrichtung.

Mögliche Systemgrenzen im Hinblick auf die Fertigungsgeschwindigkeit (Druckgeschwindigkeit) und die Auflösung können damit überwunden werden. Weiterhin ermöglicht der Einsatz einer Hohlkernfaser, z.B. in Form eines nachfolgend noch erläuterten Hohlkernfaser-Lichtwellenleiters, einen mechanisch flexibleren Aufbau der gesamten Anlage, was mit Hinblick auf die Variabilität der vorgeschlagenen Anlage eine leichtere Anpassung des Aufbaus an verschiedene Einsatzbedingungen ermöglicht. Zusätzlich wird durch den flexiblen Aufbau eine Nachrüstung bereits vorhandener Anlagen mit der vorgeschlagenen Erfindung ermöglicht.

Gemäß einer vorteilhaften Weiterbildung der Erfindung ist vorgesehen, dass das Ring-förmige Licht-Intensitätsprofil im Hinblick auf einen mehrere, oder alle der nachfolgend genannten Parameter einstellbar ist:
a) Aussendurchmesser des Rings,
b) Innendurchmesser des Rings,
c) Flächeninhalt des Auftreffbereichs des Lichtstrahls,
d) Flankensteilheit des Licht-Intensitätsprofils,
e) geometrische Querschnittsform des Licht-Intensitätsprofils,
f) Intensität der Lichtstrahlung.

Auf diese Weise kann das Licht-Intensitätsprofil an unterschiedlichste Anwendungsfälle angepasst werden. So ist insbesondere eine Einstellung des Licht-Intensitätsprofils an die individuellen Anforderungen des generativen Fertigungsverfahrens möglich. Bereits durch die Einstellung eines Biegeradius der Hohlkernfaser, der Lichtabstrahlleistung der Lichtstrahlquelle, Elementen der optischen Einrichtung wie z.B. eines Linsensystems, des Durchmessers und der Divergenz der Hohlkernfaser können Ring-förmige Licht-Intensitätsprofile mit unterschiedlicher Größe (Durchmesser und Fläche) und Intensitätsverteilung (scharfe/weiche Flanken) erzeugt werden.

Gemäß einer vorteilhaften Weiterbildung der Erfindung ist vorgesehen, dass das Rohmaterial ein Polymermaterial ist. Dies erlaubt unter anderem die Herstellung von biokompatiblen Produkten für den medizinischen Bereich. Insbesondere kann das Rohmaterial ein Silikonmaterial sein, z.B. Silikonkautschuk.

Gemäß einer vorteilhaften Weiterbildung der Erfindung weist das verfestigte Rohmaterial weiterhin eine hohe Elastizität auf. Dies hat den Vorteil, dass mit der Erfindung flexible bzw. hochelastische Bauteile hergestellt werden können, wie z.B. Weichgewebeimplantate für den medizinischen Bereich. Das verfestigte Rohmaterial kann insbesondere ein gummielastisches Material sein. Gemäß einer vorteilhaften Weiterbildung der Erfindung weist das verfestigte Rohmaterial eine Shore-Härte im Bereich von 10 bis 90 Shore-A auf, insbesondere 20 bis 60 Shore-A.

Gemäß einer vorteilhaften Weiterbildung der Erfindung ist vorgesehen, dass der Auftreffpunkt des Lichtstrahls der Lichtstrahlquelle relativ zum Fertigungsbereich einer Rohmaterial-Abgabeeinrichtung, die tropfenweise und/oder linienweise das Rohmaterial abgibt, während des Herstellungsprozesses des Bauteils nachgeführt wird, so dass frisch von der Rohmaterial-Abgabeeinrichtung abgegebenes Rohmaterial sogleich durch den Lichtstrahl erwärmt und dadurch verfestigt werden. Die Rohmaterial-Abgabeeinrichtung kann für die tropfenweise und/oder linienweise Abgabe des Rohmaterials eine Düse oder eine Kanüle aufweisen. Dies hat den Vorteil, dass das Bauteil durch punktweisen Auftrag des Rohmaterials quasi in jeder beliebigen Formgebung besonders zügig hergestellt werden kann. Durch das nach Abgabe des Rohmaterials kurzfristig durch den Lichtstrahl erzeugte Erwärmen wird dieses gleich soweit verfestigt, dass es nicht abfließen kann, z.B. von bereits gedrucktem Material, Substratmaterialien, Druckbett oder sonstigen Oberflächen. Das Nachführen des Auftreffpunkts des Lichtstrahls mit der Rohmaterial-Abgabeeinrichtung kann beispielsweise derart realisiert werden, dass die Lichtstrahlquelle fest mit der Rohmaterial-Abgabeeinrichtung mechanisch gekoppelt ist und die Abstrahlrichtung des Lichtstrahls entsprechend justiert ist, so dass automatisch der Lichtstrahl auf frisch von der Rohmaterial-Abgabeeinrichtung abgegebenes Rohmaterial auftrifft. Es ist auch möglich, dass die Lichtstrahlquelle und die Rohmaterial-Abgabeeinrichtung voneinander mechanisch entkoppelt sind. In diesem Fall ist es vorteilhaft, die Abstrahlrichtung des Lichtstrahls der Lichtstrahlquelle rechnergesteuert der Rohmaterial-Abgabeeinrichtung nachzuführen.

Gemäß einer vorteilhaften Weiterbildung der Erfindung ist vorgesehen, dass der Innendurchmesser des Ring-förmigen Licht-Intensitätsprofils im Wesentlichen konzentrisch zu einem jeweiligen von der Rohmaterial-Abgabeeinrichtung abgegebenen Rohmaterial-Tropfen ausgerichtet wird, um diesen durch Lichtbestrahlung zu verfestigen. Dies erlaubt eine energetisch effizientere Fertigung des Bauteils aus dem Rohmaterial ohne Verstopfung der Rohmaterial-Abgabeeinrichtung.

Gemäß einer vorteilhaften Weiterbildung der Erfindung ist vorgesehen, dass der Lichtstrahl ein Infrarot-Lichtstrahl ist oder wenigstens überwiegend Infrarot-Spektralanteile aufweist. Dies hat den Vorteil, dass mittels der Lichtstrahlquelle eine hohe Erwärmungseffizienz in dem zu verfestigenden Rohmaterial erzielt werden kann. Die Lichtstrahlquelle kann z.B. eine Laserlichtquelle sein, z.B. eine Infrarot-Laserdiode, ein Kohlenmonoxid-Laser oder ein CO₂-Laser. Geeignet ist ferner ein Keramik-Infrarotemitter. Der gewünschte, fein fokussierte Lichtstrahl der Lichtstrahlquelle kann auch über eine geeignete Optik, z.B. ein Linsensystem, erzeugt werden.

Gemäß einer vorteilhaften Weiterbildung der Erfindung ist der Lichtstrahl der Lichtstrahlquelle als fein fokussierter Lichtstrahl ausgebildet. Insbesondere kann der Lichtstrahl einen Durchmesser ≤ 300 µm, noch besser ≤ 200 µm, am Auftreffpunkt auf dem zu verfestigenden Rohmaterial aufweisen. Dies erlaubt die Herstellung des Bauteils mit einer hohen dreidimensionalen Auflösung, so dass auch fein detaillierte Bauteile hergestellt werden können.

Die eingangs genannte Aufgabe wird ferner gelöst durch eine Anlage zur Herstellung eines Bauteils mittels eines generativen Fertigungsprozesses, aufweisend:
a) einen Fertigungsbereich, an dem das herzustellende Bauteil mittels dort anzuordnenden flüssigen, durch Erwärmung verfestigbaren Rohmaterials entsteht,
b) eine Rohmaterial-Abgabeeinrichtung zur Abgabe des Rohmaterials an den Fertigungsbereich,
c) eine Lichtstrahlquelle zur Abgabe eines Lichtstrahls,
d) einen steuerbaren Aktuatormechanismus, mit dem der Auftreffpunkt des Lichtstrahls der Lichtstrahlquelle relativ zum Fertigungsbereich kontinuierlich und/oder schrittweise veränderbar ist,
e) eine Steuereinheit mit einem Rechner, die zur Steuerung des Aktuatormechanismus eingerichtet ist,
f) wobei die Anlage zur Durchführung eines Verfahrens zur Herstellung eines Bauteils mittels eines generativen Fertigungsprozesses der zuvor erläuterten Art eingerichtet ist.

Mit einer solchen Anlage können ebenfalls die zuvor bezüglich des Verfahrens genannten Vorteile realisiert werden. Auch die zuvor erläuterten einrichtungsmäßigen Weiterbildungen der Erfindung sind auch als vorteilhafte Weiterbildungen der Anlage realisierbar. Der Fertigungsbereich kann insbesondere ein Fertigungsbereich einer Anlage zur Herstellung eines Bauteils mittels eines generativen Fertigungsprozesses sein, z.B. eine ebene oder gewölbte Fläche, auf der das Rohmaterial abgegeben wird und wo das Bauteil dann generativ entsteht.

Insbesondere kann die Anlage einen Shutter aufweisen. Der Shutter kann durch die Steuereinheit steuerbar sein. Ferner kann die Anlage mehrere hinsichtlich der Abstrahlrichtung steuerbare Lichtstrahlquellen aufweisen. Die Lichtstrahlquellen können hinsichtlich ihrer Abstrahlrichtung und/oder hinsichtlich der Lichtabgabe (Helligkeit bzw. Ein- /Ausschalten der Lichtabgabe) von der Steuereinheit steuerbar sein. Die Lichtstrahlquelle kann eine Infrarot-Lichtstrahlquelle sein oder wenigstens überwiegend Infrarot-Spektralanteile im abgegebenen Licht aufweisen. Insbesondere kann die Lichtstrahlquelle als Laserlichtquelle ausgebildet sein.

Gemäß einer vorteilhaften Weiterbildung der Erfindung ist vorgesehen, dass das Licht der Lichtstrahlquelle über eine optische Einrichtung abgestrahlt wird, die das Licht der Lichtstrahlquelle beeinflusst, wobei die optische Einrichtung wenigstens einen Hohlkernfaser-Lichtwellenleiter und/oder wenigstens ein Blendensystem zur Erzeugung des im Wesentlichen Ring-förmigen Licht-Intensitätsprofils aufweist. Auf diese Weise kann das Licht der Lichtstrahlquelle vorteilhaft in das gewünschte Licht-Intensitätsprofil überführt werden. Der Einsatz des Hohlkernfaser-Lichtwellenleiters hat den Vorteil, dass die optische Einrichtung eine gewisse Flexibilität aufweist, sodass auch bei fest angeordneter Lichtstrahlquelle auf einfache Weise eine Verstellung und Nachführung des abgegebenen Lichtstrahls an die zu bestrahlende Position des Fertigungsbereichs möglich ist.

Die optische Einrichtung kann alternativ oder zusätzlich auch Spiegelsysteme zur gezielten Führung des Lichtstrahls aufweisen. Das außerdem vorgeschlagene Blendensystem lässt sich einfach und kostengünstig realisieren, z.B. durch die Fertigung von Metall-beschichteten ZnSe-Fenstern im Rahmen eines lithografischen Prozesses. Mit entsprechenden Fotomasken können bestimmte Bereich des für Infrarot-Strahlung transparenten ZnSe-Fensters mit einem für Infrarotstrahlung reflektierenden Metall beschichtet werden. Wird der Lichtstrahl der Lichtstrahlquelle auf das ZnSe-Fenster gerichtet, wird ein Teil der Lichtstrahlung durch die Metallbeschichtung reflektiert. Auf diese Weise können durch verschiedene Fotomasken unterschiedliche Lichtintensitäts-Profile erzeugt werden.

Gemäß einer vorteilhaften Weiterbildung der Erfindung ist vorgesehen, dass die optische Einrichtung wenigstens eine Streulinse zum Einkoppeln des Lichts von der Lichtstrahlquelle in den Hohlkernfaser-Lichtwellenleiter und/oder wenigstens eine Sammellinse zum Auskoppeln des Lichts aus dem Hohlkernfaser-Lichtwellenleiter aufweist. Auf diese Weise können bestimmte Parameter des erzeugten Lichtintensitäts-Profils, z.B. Außendurchmesser und Innendurchmesser des Rings, mit einfachen Mitteln auf gewünschte Größen eingestellt werden.

Gemäß einer vorteilhaften Weiterbildung der Erfindung ist vorgesehen, dass das Blendensystem wenigstens einen für den Lichtstrahl durchlässigen Bereich und wenigstens einen für den Lichtstrahl reflektierenden Bereich aufweist. Auch hierdurch können die Parameter des Lichtintensitätsprofils günstig beeinflusst werden.

Im Sinne der vorliegenden Erfindung ist unter dem unbestimmten Begriff "ein" kein Zahlwort zu verstehen. Wenn also z.B. von einem Bauteil die Rede ist, so ist dies im Sinne von "mindestens einem Bauteil" zu interpretieren. Soweit Winkelangaben in Grad gemacht werden, beziehen sich diese auf ein Kreismaß von 360 Grad (360°).

Die Erfindung wird nachfolgend anhand von Ausführungsbeispielen unter Verwendung von Zeichnungen näher erläutert. Es zeigen
- Figur 1: - eine schematische Darstellung einer Anlage zur Herstellung eines Bauteils mittels eines generativen Fertigungsprozesse und
- Figur 2: - ausschnittsweise eine weitere Ausführungsform einer solchen Anlage und
- Figuren 3, 4: - Licht-Intensitätsprofile in Draufsicht und
- Figuren 5 bis 7: - Licht-Intensitätsprofile im Querschnitt.

In den Figuren werden gleiche Bezugszeichen für einander entsprechende Elemente verwendet.

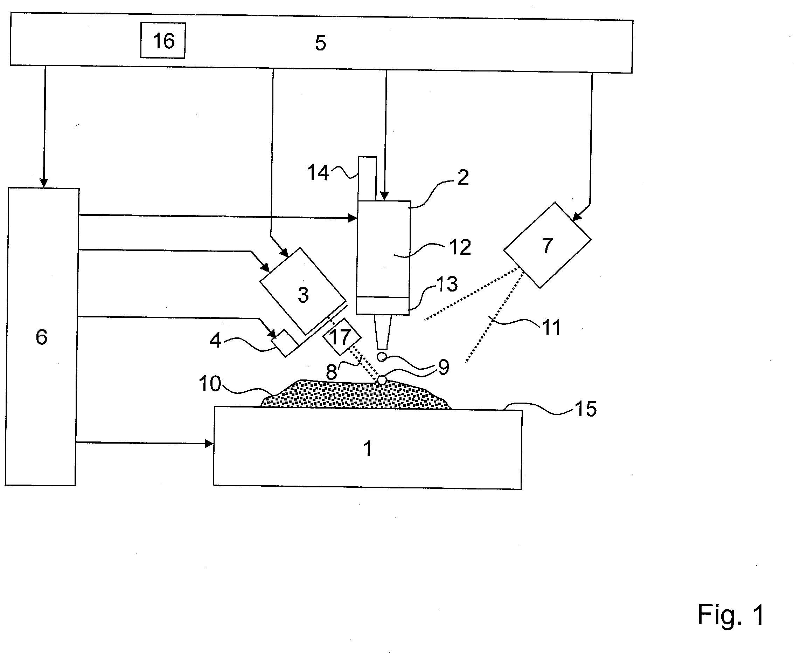

Die in Figur 1 stark schematisiert dargestellte Anlage zur Herstellung eines Bauteils 10 weist folgende Komponenten auf: einen Fertigungsbereich 1 mit einer Plattform 15, eine Rohmaterial-Abgabeeinrichtung 2, eine Lichtstrahlquelle 3, einen Shutter 4, optische Einrichtung 17, eine Steuereinheit 5 mit einem Rechner 16, einen Aktuatormechanismus 6 und eine Wärmequelle 7. In dem Fertigungsbereich 1 wird z.B. auf der Plattform 15 das Bauteil 10 mittels des generativen Fertigungsprozesses hergestellt. Hierzu gibt die Rohmaterial-Abgabeeinrichtung 2 aus darin in flüssiger Form vorgehaltenem Rohmaterial 12 Rohmaterial-Tropfen 9 ab. Die Rohmaterial-Tropfen 9 werden nach ihrem Auftreffen in dem Fertigungsbereich 1 durch einen Lichtstrahl 8 der Lichtstrahlquelle 3 erwärmt und damit verfestigt. Zur Durchführung des generativen Fertigungsprozesses muss die Position der Rohmaterial-Abgabeeinrichtung 2 relativ zum Fertigungsbereich 1 bzw. dem darauf schon zum Teil hergestellten Bauteil 10 verändert werden. Die Lichtstrahlquelle 3 muss hierbei in gleichem Maße nachgeführt werden. Hierfür dient der Aktuatormechanismus 6. Dieser kann z.B. derart ausgebildet sein, dass der Fertigungsbereich 1 z.B. in zwei Raumrichtungen in einer waagerechten Ebene verfahren wird. Zusätzlich kann auch eine Verstellmöglichkeit in der dritten Raumrichtung, d.h. nach oben und unten, vorhanden sein. Der Aktuatormechanismus 6 kann alternativ oder zusätzlich auch die Lichtstrahlquelle 3 und die Rohmaterial-Abgabeeinrichtung 2 hinsichtlich ihrer Position verändern.

Die Steuereinheit 5 steuert den gesamten Fertigungsprozess derart, dass durch einen Rechner 16, auf dem ein Computerprogramm abläuft, die einzelnen Verfahrensschritte gesteuert werden, indem z.B. die Rohmaterial-Abgabeeinrichtung 2 zur Abgabe eines Rohmaterial-Tropfens 9 angesteuert wird und der Aktuatormechanismus 6 zur entsprechenden Positionierung der einzelnen Komponenten angesteuert wird. Zudem kann über die Steuereinheit 5 die Lichtstrahlquelle 3 hinsichtlich der Lichtabgabe des Lichtstrahls 8 gesteuert werden, z.B. durch Einschalten und Ausschalten des Lichtstrahls 8. Sofern eine Lichtstrahlquelle 3 verwendet wird, bei der das Einschalten und Ausschalten des Lichtstrahls 8 nicht in der notwendigen kurzen Zeit erfolgen kann, kann zusätzlich der Shutter 4 eingesetzt werden. Dieser wirkt als in den Lichtstrahl 8 einführbare Blende, so dass durch mechanische Betätigung des Shutters 4, z.B. vom Aktuatormechanismus 6 aus, der Lichtstrahl 8 der Lichtstrahlquelle 3 kurzfristig unterbrochen und wieder frei gegeben werden kann.

Die Rohmaterial-Abgabeeinrichtung 2 kann eine Temperierungsseinrichtung 13 aufweisen, durch die das flüssige Rohmaterial 12 bereits in der Rohmaterial-Abgabeeinrichtung 2 temperiert werden kann. Die Temperierung kann zur Steuerung der Viskosität und des Vernetzungsgrades des flüssigen Rohmaterials 12 eingesetzt werden. Ferner kann die Rohmaterial-Abgabeeinrichtung 2 einen Vorrat an aushärtungsförderndem und/oder elektrisch leitfähigem Material 14 aufweisen, das über einen Mischer dem Rohmaterial 12 zugemischt werden kann. Auf diese Weise können z.B. carbon nanotubes zur Herstellung leitfähiger Bereiche des Bauteils 10 dem Rohmaterial 12 bei Bedarf zugemischt werden.

Optional kann eine thermische Nachbehandlung des Rohmaterials durch die Wärmequelle 7 durchgeführt werden, z.B. um eine abschließende vollständige Aushärtung des Rohmaterials zu erreichen. Die Wärmequelle 7 kann ebenfalls über die Steuereinheit 5 gesteuert werden, z.B. eingeschaltet und ausgeschaltet werden. Durch die Wärmequelle 7 kann das das Bauteil 10 erwärmt werden, z.B. indem Wärmestrahlung 11 auf das Bauteil 10 abgestrahlt wird oder die Wärme durch Wärmeleitung oder konvektive Wärmeübertragung auf das Bauteil 10 übertragen wird. Die Wärmequelle 7 kann auch auf andere Art als dargestellt realisiert sein, z.B. durch einen beheizten Fertigungsbereich 1, wie z.B. ein beheiztes Druckbett.

Zusätzlich ist erkennbar, dass der Lichtstrahl von der Lichtstrahlquelle 3 durch eine optische Einrichtung 17 geführt wird, aus der der Lichtstrahl 8 verbreitert mit dem gewünschten im Wesentlichen Ring-förmigen Licht-Intensitätsprofil abgestrahlt wird und auf den Fertigungsbereich 1 bzw. im Bereich eines Rohmaterial-Tropfens 9 auftrifft.

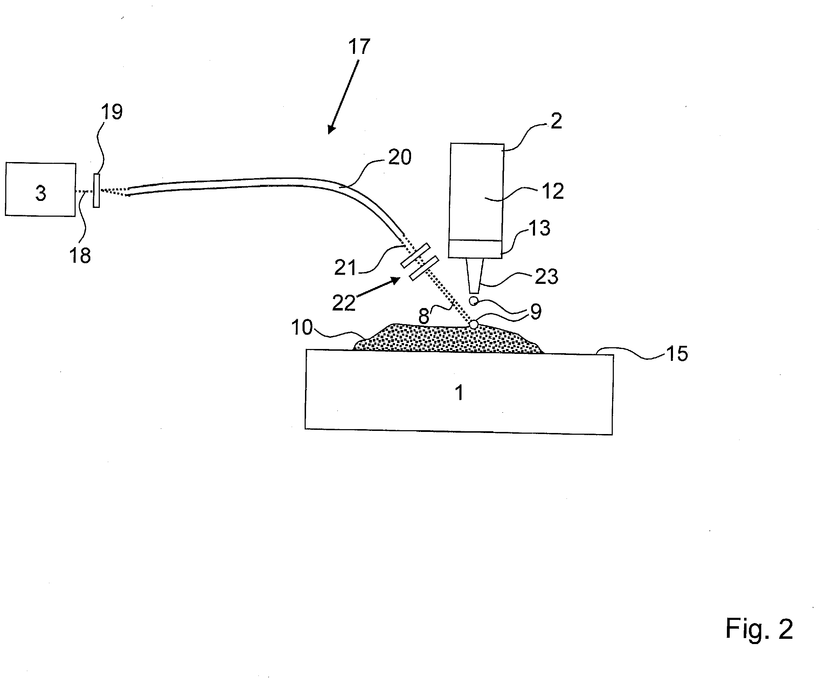

Anhand der Figur 2 wird eine vorteilhafte Ausführungsform der zuvor erläuterten optischen Einrichtung 17 dargestellt. Erkennbar ist, dass von der Lichtstrahlquelle 3 zunächst ein stark fokussierter Lichtstrahl 18 abgegeben wird, z.B. ein Laserstrahl. Dieser wird durch eine Streulinse 19 aufgefächert und in einen Hohlkernfaser-Lichtwellenleiter 20 eingekoppelt. Der Hohlkernfaser-Lichtwellenleiter 20 ist ähnlich wie ein Schlauch ausgebildet, d.h. er weist das lichtwellenleitende Material in einem ringförmigen Außenbereich auf und ist im Zentrum hohl. Das vom Hohlkernfaser-Lichtwellenweiter 20 abgestrahlte Licht 21 wird durch eine oder mehrere Linsen 22 geführt und dann als Lichtstrahl 8 auf den Fertigungsbereich 1 bzw. den Rohmaterial-Tropfen 9 abgestrahlt. Die Linsen 22 dienen zur Anpassung der Abmessungen des Ringförmigen Licht-Intensitätsprofils, z.B. für den Fall, dass kein Hohlkernfaser-Lichtquellenleiter 20 mit bereits passenden Abmessungen geeignet ist.

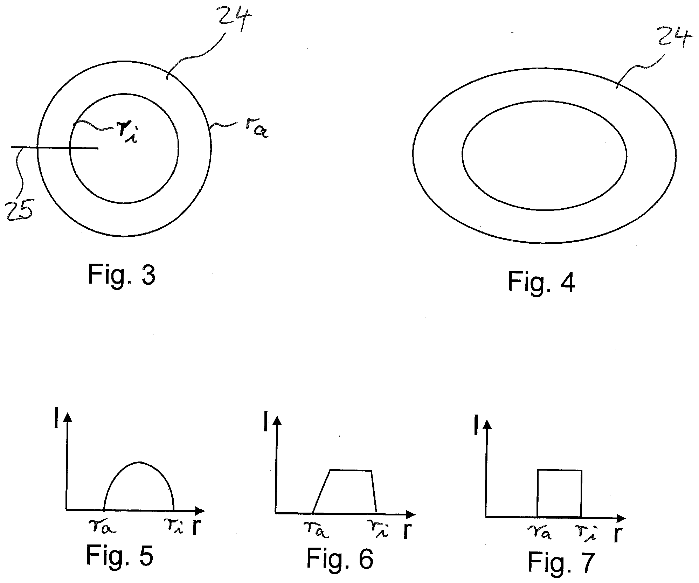

Die Figur 3 zeigt eine erste Ausführungsform eines Ring-förmigen Licht-Intensitätsprofils 24 in Draufsicht, d.h. in einer Ansicht in einer Schnittebene senkrecht durch den Lichtstrahl 8. Es wird dabei Licht im ringförmigen Bereich zwischen dem Außendurchmesser rₐ und dem Innendurchmesser rᵢ abgegeben. Innerhalb des Innendurchmessers rᵢ wird im Wesentlichen kein Licht abgegeben, auch nicht außerhalb des Außendurchmesser rₐ.

Die Figur 4 zeigt eine weitere Ausführungsform eines Ring-förmigen Licht-Intensitätsprofils 24, das im Gegensatz zur Figur 3 nicht kreisrund ist, sondern eine elliptische Geometrie hat.

Die Figuren 5 bis 7 zeigen beispielhafte Licht-Intensitätsprofile in einer Schnittebene 25, die in Figur 3 eingezeichnet ist. Hierbei ist jeweils die Lichtintensität I über eine radiale Koordinate r aufgetragen. Wie man erkennt, sind unterschiedlichste Gestaltungen des Licht-Intensitätsprofils möglich, mit gekrümmten Verlauf der Lichtintensität I über die radiale Koordinate r, z.B. mit kreisbogenförmig gekrümmten Verlauf, wie in Figur 5 dargestellt, oder mit im Wesentlichen linear ansteigender und abfallender Flanke, die die gleiche Flankensteilheit oder unterschiedliche Flankensteilheiten aufweisen können (Figur 6), oder ein im Wesentlichen rechteckförmiger Intensitätsverlauf (Figur 7).

## Patentansprüche

1. Verfahren zur Herstellung eines Bauteils (10) mittels eines generativen Fertigungsprozesses, wobei das Bauteil (10) ganz oder teilweise aus einem flüssigen, durch Erwärmung verfestigbaren Rohmaterial (12) hergestellt wird, wobei das Rohmaterial (12) in flüssiger Form in einen Fertigungsbereich (1) abgegeben wird und durch rechnergesteuerte, punktuelle gezielte Lichtbestrahlung erwärmt und dadurch verfestigt wird, indem der Auftreffbereich eines Lichtstrahls (8) einer Lichtstrahlquelle (3) relativ zum Fertigungsbereich (1) kontinuierlich und/oder schrittweise verändert wird, wobei der Lichtstrahl (8) von der Lichtstrahlquelle (3) oder einer das Licht der Lichtstrahlquelle (3) beeinflussenden optischen Einrichtung (17) mit einem im Wesentlichen Ring-förmigen Licht-Intensitätsprofil (24) abgegeben wird, **dadurch gekennzeichnet, dass** das im Wesentlichen Ring-förmige Licht-Intensitätsprofil (24) durch einen ringförmigen Bereich gebildet ist, in dem die Licht-Intensität vom Außendurchmesser in Richtung zur Mitte des Rings zunächst ansteigt und dann zum Innendurchmesser des Rings hin wieder abfällt, wobei im Innenbereich des Rings, d.h. innerhalb des Innendurchmessers, die Lichtintensität im Wesentlichen gleich null ist.

2. Verfahren nach dem vorhergehenden Anspruch, **dadurch gekennzeichnet, dass** das Ring-förmige Licht-Intensitätsprofil (24) im Hinblick auf einen mehrere, oder alle der nachfolgend genannten Parameter einstellbar ist:
a) Aussendurchmesser (rₐ) des Rings,
b) Innendurchmesser (rᵢ) des Rings,
c) Flächeninhalt des Auftreffbereichs des Lichtstrahls (8),
d) Flankensteilheit des Licht-Intensitätsprofils (24),
e) geometrische Querschnittsform des Licht-Intensitätsprofils (24),
f) Intensität der Lichtstrahlung.

3. Verfahren nach einem der vorhergehenden Ansprüche, **dadurch gekennzeichnet, dass** das Rohmaterial (12) ein Polymermaterial ist.

4. Verfahren nach einem der vorhergehenden Ansprüche, **dadurch gekennzeichnet, dass** der Auftreffpunkt des Lichtstrahls (8) der Lichtstrahlquelle (3) relativ zum Fertigungsbereich (1) einer Rohmaterial-Abgabeeinrichtung (2), die tropfenweise und/oder linienweise das Rohmaterial (12) abgibt, während des Herstellungsprozesses des Bauteils (10) nachgeführt wird, so dass frisch von der Rohmaterial-Abgabeeinrichtung (2) abgegebenes Rohmaterial (9) sogleich durch den Lichtstrahl (8) erwärmt und dadurch verfestigt werden.

5. Verfahren nach dem vorhergehenden Anspruch, **dadurch gekennzeichnet, dass** der Innendurchmesser (rᵢ) des Ring-förmigen Licht-Intensitätsprofils im Wesentlichen konzentrisch zu einem jeweiligen von der Rohmaterial-Abgabeeinrichtung (2) abgegebenen Rohmaterial-Tropfen (9) ausgerichtet wird, um diesen durch Lichtbestrahlung zu verfestigen.

6. Verfahren nach einem der vorhergehenden Ansprüche, **dadurch gekennzeichnet, dass** der Lichtstrahl (8) ein Infrarot-Lichtstrahl ist oder wenigstens überwiegend Infrarot-Spektralanteile aufweist.

7. Verfahren nach einem der vorhergehenden Ansprüche, **dadurch gekennzeichnet, dass** eine Temperierung des flüssigen Rohmaterials (12) zur Steuerung der Viskosität und des Vernetzungsgrades des flüssigen Rohmaterials (12) durchgeführt wird.

8. Anlage zur Herstellung eines Bauteils (10) mittels eines generativen Fertigungsprozesses, aufweisend:
a) einen Fertigungsbereich (1), an dem das herzustellende Bauteil (10) mittels dort anzuordnenden flüssigen, durch Erwärmung verfestigbaren Rohmaterials (12) entsteht,
b) eine Rohmaterial-Abgabeeinrichtung (2) zur Abgabe des Rohmaterials (12) an den Fertigungsbereich (1),
c) eine Lichtstrahlquelle (3) zur Abgabe eines Lichtstrahls (8),
d) einen steuerbaren Aktuatormechanismus (6), mit dem der Auftreffpunkt des Lichtstrahls (8) der Lichtstrahlquelle (3) relativ zum Fertigungsbereich (1) kontinuierlich und/oder schrittweise veränderbar ist,
e) eine Steuereinheit (5) mit einem Rechner (16), die zur Steuerung des Aktuatormechanismus (6) eingerichtet ist,
f) wobei die Anlage zur Durchführung eines Verfahrens zur Herstellung eines Bauteils (10) mittels eines generativen Fertigungsprozesses nach einem der vorhergehenden Ansprüche eingerichtet ist.

9. Anlage nach dem vorhergehenden Anspruch, **dadurch gekennzeichnet, dass** das Licht der Lichtstrahlquelle (3) über eine optische Einrichtung (17) abgestrahlt wird, die das Licht der Lichtstrahlquelle beeinflusst, wobei die optische Einrichtung (17) wenigstens einen Hohlkernfaser-Lichtwellenleiter (20) zur Erzeugung des im Wesentlichen Ring-förmigen Licht-Intensitätsprofils (24) aufweist.

10. Anlage nach dem vorhergehenden Anspruch, **dadurch gekennzeichnet, dass** die optische Einrichtung (17) wenigstens eine Streulinse (19) zum Einkoppeln des Lichts von der Lichtstrahlquelle (3) in den Hohlkernfaser-Lichtwellenleiter (20) und/oder wenigstens eine Sammellinse (22) zum Auskoppeln des Lichts aus dem Hohlkernfaser-Lichtwellenleiter (20) aufweist.

11. Anlage nach einem der Ansprüche 8 bis 10, **dadurch gekennzeichnet, dass** das Licht der Lichtstrahlquelle (3) über eine optische Einrichtung (17) abgestrahlt wird, die das Licht der Lichtstrahlquelle beeinflusst, wobei die optische Einrichtung (17) wenigstens ein Blendensystem zur Erzeugung des im Wesentlichen Ring-förmigen Licht-Intensitätsprofils (24) aufweist.

12. Anlage nach Anspruch 11, **dadurch gekennzeichnet, dass** das Blendensystem wenigstens einen für den Lichtstrahl durchlässigen Bereich und wenigstens einen für den Lichtstrahl reflektierenden Bereich aufweist.

## Claims

1. Method for producing a component (10) by means of an additive manufacturing process, the component (10) being fully or partially produced from a liquid raw material (12) solidifiable by heating, with the raw material (12) being dispensed in liquid form into a manufacturing zone (1) and, by means of computer-controlled, point-by-point targeted light irradiation, being heated and being solidified by virtue of the region of incidence of a light beam (8) from a light beam source (3) being altered continuously and/or incrementally relative to the manufacturing zone (1), the light beam (8) being emitted with a substantially ring-shaped light intensity profile (24) by the light beam source (3) or by an optical device (17) that influences the light from the light beam source (3), **characterized in that** the substantially ring-shaped light intensity profile (24) is formed by a ring-shaped region in which the light intensity initially increases in the direction toward the centre of the ring from the outer diameter and then drops off again toward the inner diameter of the ring, with the light intensity being substantially equal to zero in the interior region of the ring, that is to say within the inner diameter.

2. Method according to the preceding claim, **characterized in that** the ring-shaped light intensity profile (24) is adjustable in view of one, more or all of the parameters specified below:
a) outer diameter (rₐ) of the ring,
b) inner diameter (rᵢ) of the ring,
c) area of the region of incidence of the light beam (8),
d) edge steepness of the light intensity profile (24),
e) geometrical cross-sectional shape of the light intensity profile (24),
f) intensity of the light radiation.

3. Method according to either of the preceding claims, **characterized in that** the raw material (12) is a polymer material.

4. Method according to any one of the preceding claims, **characterized in that** the point of incidence of the light beam (8) from the light beam source (3) is repositioned relative to the manufacturing zone (1) of a raw material dispensing device (2), which dispenses the raw material (12) drop-by-drop and/or line-by-line, during the production process of the component (10) such that raw material (9) freshly dispensed by the raw material dispensing device (2) is immediately heated by the light beam (8) and solidified thereby.

5. Method according to the preceding claim, **characterized in that** the inner diameter (rᵢ) of the ring-shaped light intensity profile is aligned substantially concentrically with respect to a respective raw material drop (9) dispensed by the raw material dispensing device (2), in order to solidify this raw material drop by means of light irradiation.

6. Method according to any one of the preceding claims, **characterized in that** the light beam (8) is an infrared light beam or has at least predominantly infrared spectral components.

7. Method according to any one of the preceding claims, **characterized in that** the temperature of the liquid raw material (12) is controlled for the purposes of controlling the viscosity and the degree of crosslinking of the liquid raw material (12).

8. Apparatus for producing a component (10) by means of an additive manufacturing process, comprising:
a) a manufacturing zone (1), in which the component (10) to be produced is created by means of liquid raw material (12) which is to be arranged there and is solidifiable by heating,
b) a raw material dispensing device (2) for dispensing the raw material (12) to the manufacturing zone (1),
c) a light beam source (3) for emitting a light beam (8),
d) a controllable actuator mechanism (6), by means of which the point of incidence of the light beam (8) from the light beam source (3) is alterable continuously and/or incrementally relative to the manufacturing zone (1),
e) a control unit (5) having a computer (16) and being configured to control the actuator mechanism (6),
f) the apparatus being configured to carry out a method for producing a component (10) by means of an additive manufacturing process according to any one of the preceding claims.

9. Apparatus according to the preceding claim, **characterized in that** the light from the light beam source (3) is emitted via an optical device (17) which influences the light from the light beam source, the optical device (17) comprising at least one hollow-core fibre optical waveguide (20) for generating the substantially ring-shaped light intensity profile (24).

10. Apparatus according to the preceding claim, **characterized in that** the optical device (17) comprises at least one diverging lens (19) for input-coupling the light from the light beam source (3) into the hollow-core fibre optical waveguide (20) and/or at least one converging lens (22) for output-coupling the light from the hollow-core fibre optical waveguide (20).

11. Apparatus according to any one of Claims 8 to 10, **characterized in that** the light from the light beam source (3) is emitted via an optical device (17) which influences the light from the light beam source, the optical device (17) comprising at least one stop system for generating the substantially ring-shaped light intensity profile (24).

12. Apparatus according to Claim 11, **characterized in that** the stop system has at least one region transmissive to the light beam and at least one region reflecting the light beam.

## Revendications

1. Procédé de fabrication d'un composant (10) au moyen d'un processus de fabrication générative,
dans lequel
le composant (10) est fabriqué entièrement ou partiellement à partir d'un matériau brut (12) liquide, pouvant être solidifié par chauffage,
le matériau brut (12) est délivré sous forme liquide dans une zone de fabrication (1) et est chauffé et ainsi solidifié par irradiation lumineuse ponctuelle ciblée, commandée par ordinateur, du fait que la zone d'impact d'un faisceau lumineux (8) d'une source de faisceau lumineux (3) par rapport à la zone de fabrication (1) est modifiée en continu et/ou graduellement,
le faisceau lumineux (8) est émis avec un profil d'intensité lumineuse (24) sensiblement en forme d'anneau par la source de faisceau lumineux (3) ou par un dispositif optique (17) qui influence la lumière de la source de faisceau lumineux (3),
**caractérisé en ce que**
le profil d'intensité lumineuse (24) sensiblement en forme d'anneau est formée par une zone annulaire dans laquelle l'intensité lumineuse augmente tout d'abord depuis le diamètre extérieur en direction du centre de l'anneau pour ensuite diminuer vers le diamètre intérieur de l'anneau, l'intensité lumineuse étant sensiblement égale à zéro dans la zone intérieure de l'anneau, c'est-à-dire à l'intérieur du diamètre intérieur.

2. Procédé selon la revendication précédente,
**caractérisé en ce que** le profil d'intensité lumineuse (24) en forme d'anneau est réglable en ce qui concerne un ou plusieurs des paramètres suivants :
a) le diamètre extérieur (rₐ) de l'anneau,
b) le diamètre intérieur (rᵢ) de l'anneau,
c) la superficie de la zone d'impact du faisceau lumineux (8),
d) la pente de front du profil d'intensité lumineuse (24),
e) la forme géométrique de la section transversale du profil d'intensité lumineuse (24),
f) l'intensité du rayonnement lumineux.

3. Procédé selon l'une des revendications précédentes,
**caractérisé en ce que** le matériau brut (12) est un matériau polymère.

4. Procédé selon l'une des revendications précédentes,
**caractérisé en ce que** le point d'impact du faisceau lumineux (8) de la source de faisceau lumineux (3) par rapport à la zone de fabrication (1) est animé à suivre un dispositif de distribution de matériau brut (2) qui distribue le matériau brut (12) par gouttes et/ou par lignes, pendant le processus de fabrication du composant (10), de sorte que le matériau brut (9) fraîchement distribué par le dispositif de distribution de matériau brut (2) est immédiatement chauffé par le faisceau lumineux (8) et est ainsi solidifié.

5. Procédé selon la revendication précédente,
**caractérisé en ce que** le diamètre intérieur (rᵢ) du profil d'intensité lumineuse en forme d'anneau est orienté de manière sensiblement concentrique par rapport à une goutte de matériau brut (9) respective distribuée par le distributeur de matériau brut (2), afin de la solidifier par irradiation lumineuse.

6. Procédé selon l'une des revendications précédentes,
**caractérisé en ce que** le faisceau lumineux (8) est un faisceau lumineux infrarouge ou présente au moins principalement des composantes spectrales infrarouges.

7. Procédé selon l'une des revendications précédentes,
**caractérisé en ce qu'**une régulation de température du matériau brut liquide (12) est effectuée pour contrôler la viscosité et le degré de réticulation du matériau brut liquide (12).

8. Installation pour la fabrication d'un composant (10) au moyen d'un processus de fabrication générative, comprenant :
a) une zone de fabrication (1) dans laquelle le composant (10) à fabriquer se forme au moyen d'un matériau brut liquide (12) à y prévoir, pouvant être solidifié par chauffage,
b) un dispositif de distribution de matériau brut (2) pour distribuer le matériau brut (12) à la zone de fabrication (1),
c) une source de faisceau lumineux (3) pour émettre un faisceau lumineux (8),
d) un mécanisme d'actionneur (6) pouvant être commandé, au moyen duquel le point d'impact du faisceau lumineux (8) de la source de faisceau lumineux (3) par rapport à la zone de fabrication (1) peut être modifié en continu et/ou graduellement,
e) une unité de commande (5) comprenant un ordinateur (16) et conçue pour commander le mécanisme d'actionneur (6),
f) l'installation étant conçue pour mettre en œuvre un procédé de fabrication d'un composant (10) au moyen d'un processus de fabrication générative selon l'une des revendications précédentes.

9. Installation selon la revendication précédente,
**caractérisée en ce que** la lumière de la source de faisceau lumineux (3) est émise par l'intermédiaire d'un dispositif optique (17) qui influence la lumière de la source de faisceau lumineux, le dispositif optique (17) comprenant au moins un guide d'onde optique à fibre optique à cœur creux (20) pour générer le profil d'intensité lumineuse (24) sensiblement en forme d'anneau.

10. Installation selon la revendication précédente,
**caractérisée en ce que** le dispositif optique (17) comprend au moins une lentille divergente (19) pour injecter la lumière, provenant de la source de faisceau lumineux (3), dans le guide d'onde optique à fibre optique à cœur creux (20) et/ou au moins une lentille convergente (22) pour extraire la lumière hors du guide d'onde optique à fibre optique à cœur creux (20).

11. Installation selon l'une des revendications 8 à 10,
**caractérisée en ce que** la lumière de la source de faisceau lumineux (3) est émise par l'intermédiaire d'un dispositif optique (17) qui influence la lumière de la source de faisceau lumineux, le dispositif optique (17) comprenant au moins un système de diaphragme pour générer le profil d'intensité lumineuse (24) sensiblement en forme d'anneau.

12. Installation selon la revendication 11,
**caractérisée en ce que** le système de diaphragme comprend au moins une zone transparente pour le faisceau lumineux et au moins une zone réfléchissante pour le faisceau lumineux.
